# EUROPEAN PATENT APPLICATION

(11) **EP 0 547 896 A2**
(43) Date of publication of application: **23.06.1993**
(21) Application number: 92311523.2
(22) Date of filing: 17.12.1992
(51) Int. Cl.: B01D 35/18, B01D 27/02

(54) **Reclamation device**

(30) Priority: 18.12.1991 US 809331
(71) Applicant: SOUTHEAST CAPITAL FINANCING, INC., Clearwater, Florida 34623 (US)
(72) Inventor: Depaul, Michael, Inverness Illinois 60067 (US)
(74) Representative: W.P. Thompson & Co.

(57) **Abstract**

An oil reclamation device (20) comprising an evaporator plate (30) with a cover (70) secured thereto forming an evaporation chamber (100) which is heated by a heater means (38) mounted in the evaporator plate (30). The cover (70) is removably mounted to the evaporator plate (30). A filter assembly (50) is mounted to the evaporator plate (30) and a filter cartridge (52) is mounted in the housing (50).

## Description

The present invention relates to a fluid treatment device. It particularly relates to an oil filter and reconditioning device such as, for example, one used on internal combustion engines and to an improved device with a detachable filter housing and internally mounted filter assembly. The reconditioning device can be disassembled and reassembled for easy installation and maintenance.

The present invention particularly relates to fluid reclamation devices which are used with engines using lubricating oils and hydraulic systems to remove solid contaminates and water or other volatile contaminates from the lubricating oils or hydraulic fluids. More particularly, the present invention relates to a unique evaporation plate construction on which is screwed a cover plate.

Oil reclamation devices of the general type disclosed and described herein are generally well known. These devices are used to remove both solid and liquid contaminates from the lubricating oil. It is well known that oil in and of itself does not "wear out" and that additives contained in the oil remain relatively stable once a predetermined level has been reached. Once the solid and volatile contaminates are removed from the oil, the oil is substantially reconditioned and remains in a useful state.

A discussion of oil reclamation devices is found in U.S. Department of Energy publication DOE/BC/10256-1 Initial Assessment of Selected Advanced Lubricating Oil Filter, September 1981. As part of the publication, patent and literature searches were conducted. Fifty seven patent specifications were listed which showed filters that extract vapour from oil under vacuum and/or with added heat along with seventeen literature references.

Pertinent prior art which is specifically directed towards oil reclamation devices of the general construction of the present invention are typified by US-A- 4 289 583; US-A- 4 227 969; US-A- 4 189 351 and US-A- 4 943 352.

US-A- 4 289 583 discloses an oil reclamation device with a cap heating head having a heat transmitting member mounted in a cavity and an evaporator plate mounted to the cap heating head to form a baffled evaporator chamber. The filter housing contains the evaporator plate and is secured to the cap heating head. The filter housing is provided with an oil inlet valve at its bottom.

US-A- 4 227 969 and US-A- 4 189 351 disclose oil reclamation devices of a similar construction, both having a fixed filter and oil inlet positioned in the base of the filter which requires piping from the engine or fluid source to disburse oil upward into the filter.

It is known in the art to utilize removable filters in connection with heated oil refining apparatus to remove liquid and solid contaminates from the oil used in internal combustion engines.

As an example in US-A- 4 146 475 the fine filter and coarse filter which are used in the apparatus can be replaced by separating them from the concentric cylinder housing by unscrewing the concentric cylinder housing.

In US-A- 4 585 924 a spin on diesel oil filter is used. The filter is constructed of conventional pleated paper construction with a base plate having a central threaded bore. The filter is screwed onto the lower threaded end of a nipple on an associated spacer which is in turn threaded at its top and screwed onto a second externally threaded nipple that is cast in and extends from the manifold.

In US-A- 4 943 352 a screwed on filter cartridge is fastened onto a nipple of an evaporator head with the cap member holding a heating element which is used to heat the evaporation chamber. Athroughgo- ing tube is secured in the filter cartridge to deposit oil at the bottom of the filter.

In US-A- 4 369 110 the filter cartridge is provided with a perforated web having a central internal threaded opening which is screwed onto the outside of the end of a coaxial pipe which serves as an oil inlet and conduit. A needle member is screwed to the inside of the coaxial pipe and is jammed into the filter media providing a passageway for the oil into the filter cartridge.

The following United States patent Specifications also disclose the general state of the fitter refining art: US-A- 4 388 185; 4 354 946; 4 249 438; 4 272 371; 4 261 838; 3 912 631 and 2 707 051.

Numerous disadvantages are associated with these known devices. For example, oil flows directly at a fairly high flow rate into a specific area of filter without dispersal throughout the filter containercaus- ing filter clogging and an increase in the micro size of the particles that are able to be filtered. Oil containing unvolitized contaminates will pass from the filter directly into the oil outlet means of the container because it will not be included in any thin film travelling over the vapourizing surface on the upper side of the evaporator plate.

It is important that the oil passing across the vaporizing surface be maintained in a thin film to promote vaporization of the liquid contaminates. With other known filter refining devices, if the longitudinal axis is angularly disposed from the vertical while installed, the oil will all flow to one side of the evaporator plate.

None of the prior art devices are designed to effect the greatest efficiency of removing the contaminates and maintaining the operation of the device. Pressure build-up causes oil flow problems and shifting of the filter medium during operation. Inefficient transfer of heat from the heating surface to the thin film of oil is encountered because of spacing problems in the heater cavity and lack of heat conduction.

According to the present invention there is provided a removable filter housing which holds a filter canister.

The present invention also provides an evaporator plate with a heat transmitting member which contributes to establish a uniformity in heating and fluid flow through the evaporation chamber.

The present invention further provides a filter assembly which will obviate problems associated with the disposition of fibrous material in the filter as is provided in prior art oil reclamation devices.

According to the present invention there is provided an oil reclamation device comprising an evaporator plate with a cover secured thereto forming an evaporation chamber which is heated by a heating means mounted in the evaporator plate. The cover is removably mounted to the evaporator plate. A filter assembly is mounted to the evaporator plate and a filter cartridge is mounted in the housing.

While the description of the present invention and the operation is described in terms of oil purification, the term "oil" is used to encompass hydraulic fluid or any other lubrication or fluid which requires cleaning to maintain its original purpose and effectiveness.

According to one embodiment of the present invention there is provided a fluid reclamation device for filtering solid and liquid impurities from fluid which comprises
a removable filter assembly comprising a housing, a filter cartridge means mounted in the housing; the filter cartridge means comprising a solid cylindrical side member, a top plate defining aperture means mounted to the side member and a bottom plate defining aperture means mounted to the side member, the filter assembly housing including filter material;
an evaporator plate including means holding for the filter assembly; the evaporator plate defining fluid inlet means, fluid outlet means, and a centre post defining a heater chamber;
a heater means mounted in the evaporator plate heater chamber having a surface to surface engagement with the evaporator plate for heating the fluid circulating in an evaporation chamber formed by the evaporator plate; and
a cover member removably secured to the evaporator plate to define an evaporation chamber heated by the heater means causing vaporization of liquid impurities in the fluid.

The top plate of the cartridge may be provided with an annular shoulder for holding a sealing gasket on its top surface to provide a leakproof seal between the cartridge and the evaporator plate. The filter means may include a filter pad means in the flow path between the filter material and perforated top plate of the cartridge. Preferably the filter pad means comprise a plurality of pads. The cartridge means may be spring mounted in the housing. The filter cartridge means may be a solid cylindrical casing with solid end walls, each of the end walls being provided with an aperture means through which fluid flows, one of the end walls defining a domed projection means.

According to another embodiment of the present invention there is provided an oil reclamation device for filtering solid and liquid impurities from oil which comprises
a cover member, an evaporator plate removably mounted to the cover member forming a baffled evaporation chamber between the cover member and the evaporator plate for receiving oil from a filter assembly and circulating the oil in the evaporation chamber, the evaporator plate defining inlet means directly opening to a filter housing, the evaporator plate defining a planar lower surface and a central post member extending from its upper surface, the post member defining a heating chamber,
the filter assembly comprising a housing removably mounted to the evaporator plate, a filter cartridge containing filter material mounted in the housing, the filter cartridge comprising a cylindrical solid side member, a bottom plate secured to the side member defining oil inlet means and a top plate secured to the side member defining oil outlet means,
a heater means mounted in a heater chamber formed in the post member extending from the upper surface of said evaporator plate, a central heating means extending from said evaporator plate concentrically positioned around said post member, the central heating means being configured with inclined top and side surfaces, the heater means being adapted to heat oil cascading down the top and side surfaces of the central heating means and heat oil circulating in the evaporator chamber causing evaporation of liquid impurities in the oil, and vent means formed in the cover member to discharge the evaporated impurities from the evaporation chamber.

There may be threaded fastening means securing the cover member to the evaporator plate. The cartridge may include a filter medium and secondary filter means comprising at least one pad formed of fibre, preferably felt, with a 1 to 4 f..lm (micron) porosity.

The cartridge may be spring mounted and biased toward the evaporator plates. A particularly useful device is one in which the filter cartridge means is a cylindrical solid casing with solid end walls, the end walls being provided with central aperture means through which fluid flows to and from filter pad means positioned adjacent each end wall, filter medium positioned between the filter pad means, one end wall of the cartridge means defining a spring seat, and spring means mounted on the spring seat biasing the filter cartridge toward the evaporator plate.

The top plate may include a central domed area with a planar top defining a central aperture and an annular rim for retaining and holding sealing means.

According to a further embodiment of the present invention there is provided an oil reclamation device for filtering solid and liquid impurities from oil which comprises;
a cover member with a central threaded aperture, an evaporator plate with a centre post provided with thread means removably mounted to the cover member forming a baffled evaporation chamber between the cover member and the evaporator plate for receiving oil from a filter assembly and circulating the oil in the evaporation chamber, the evaporator plate defining inlet means directly opening to a filter housing, the evaporator plate defining a planar lower surface and an upper surface, a central post member extending from the upper surface of the evaporator plate, the post member defining a heating chamber, a central heating means extending from the upper surface of the evaporator plate positioned around the post member, a baffle wall means extending from the position the upper surface of the evaporator plate substantially around the central heating means and an end wall extending from the upper surface of the evaporator plate enclosing the central post member, the central heating means, and the baffle wall means,
the filter assembly comprising a housing removably mounted to the evaporator plate, a filter cartridge containing filter material mounted in the housing, the filter cartridge comprising a cylindrical solid side member, a bottom plate secured to the side member defining oil inlet means and a top plate secured to the side member defining oil outlet means, the filter cartridge being urged against the planar lower surface of the evaporator plate by spring means engaging the bottom plate,
a heater means mounted in a heater chamber formed in the post member extending from the upper surface of the evaporator plate past the cover member, the heater means being adapted to heat oil cascading down the top and side surfaces of the central heating means and heat oil circulating in the evaporator chamber causing evaporation of liquid impurities in the oil, and vent means formed in the cover member to discharge the evaporated impurities from the evaporation chamber.

There may be cap means mounted to the evaporation plate post member and engaging the cover member, the cap means covering the heater means.

The cartridge may include a cotton filter medium and secondary filter means comprising a pad formed of fibre, preferably felt, with a 1 to 4 f..lm (micron) porosity adjacent each end plate.

According to a still further embodiment of the present invention there is provided an oil reclamation device for filtering solid and liquid impurities from oil which comprises;
a cover member with a central aperture, an evaporator plate with a centre post means mounted to the cover member forming a baffled evaporation chamber between the cover member and the evaporator plate for receiving oil from a filter assembly and circulating the oil in the evaporation chamber, the evaporator plate defining inlet means directly opening to a filter housing, the evaporator plate defining a planar lower surface and an upper surface, a central post member extending from the upper surface of the evaporator plate, the post member defining a heating chamber, a baffle wall means extending from the position of the upper surface of the evaporator plate substantially around the post member and an end wall extending from the upper surface of the evaporator plate enclosing the central post member, and the baffle wall means,
the filter assembly comprising a housing removably mounted to the evaporator plate, a filter cartridge containing filter material mounted in the housing, the filter cartridge comprising a cylindrical solid side member, a bottom plate secured to the side member defining oil inlet means and a top plate secured to the side member defining oil outlet means, the filter cartridge being urged against the planar lower surfacae of the evaporator plate by spring means engaging the bottom plate,
a heater means mounted in a heater chamber formed in the post member extending from the upper surface of the evaporator plate past the cover member, the heater means being adapted to heat oil cascading down an outwardly inclined top and side surface of the post member and heat oil circulating in the evaporator chamber causing evaporation of liquid impurities in the oil, and vent means.

The baffle means may be sectioned and form a hexagonal configuration.

In a particular application, the oil reclamation device of the present invention comprises an evaporator plate which holds a heating member and together with a screwed on cover defines an evaporation chamber. The evaporator plate defines an upper surface forming a vapourizing surface along which oil passes in a thin film and has a lower planar surface which abuts the filter housing and can be held thereon by spring clips. A filter canister can be spring mounted in the filter housing against the lower planar surface of the evaporator plate in a sealed relationship. Oil passes through the bottom of the filter through the evaporator plate onto the upper outward- ing extending surface of the centre member of the evaporator plate to deliver oil into the evaporation chamber in a thin film along the vapourizing surface.

The heating element which may be used in the present invention can be designed to fit into the cavity formed in the centre post of the evaporator plate and be held in a secured position therein for surface to surface engagement for optimum heat conductivity.

The pesent invention may also utilize an effective sealing gasket between the evaporator plate and the filter housing to direct the flow of the oil from the inlet down the canister sides and up through the filter canister into the evaporator plate.

The present invention will now be more particularly described with reference to and as illustrated in the accompanying drawings, wherein like reference characters designate corresponding parts in the several views. In the accompanying drawings:
Figure 1 is a perspective view of an oil reclamation device of the present invention;
Figure 2 is a top plan view of the cover of the oil reclamation device of Figure 1;
Figure 3 is a plan view of the bottom of the cover shown in Figure 2;

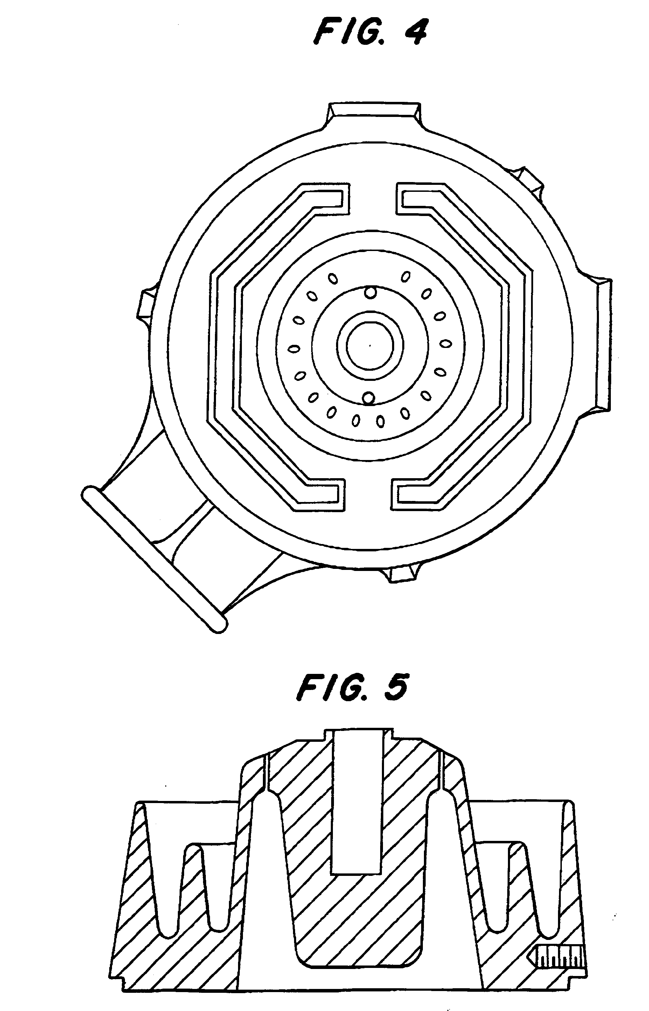

Figure 4 is a top plan view of the top of the evaporator plate of the oil reclamation device shown in Figure 9;
Figure 5 is a cross-sectional view of the evaporator plate of Figure 4 taken across line 5'-5';

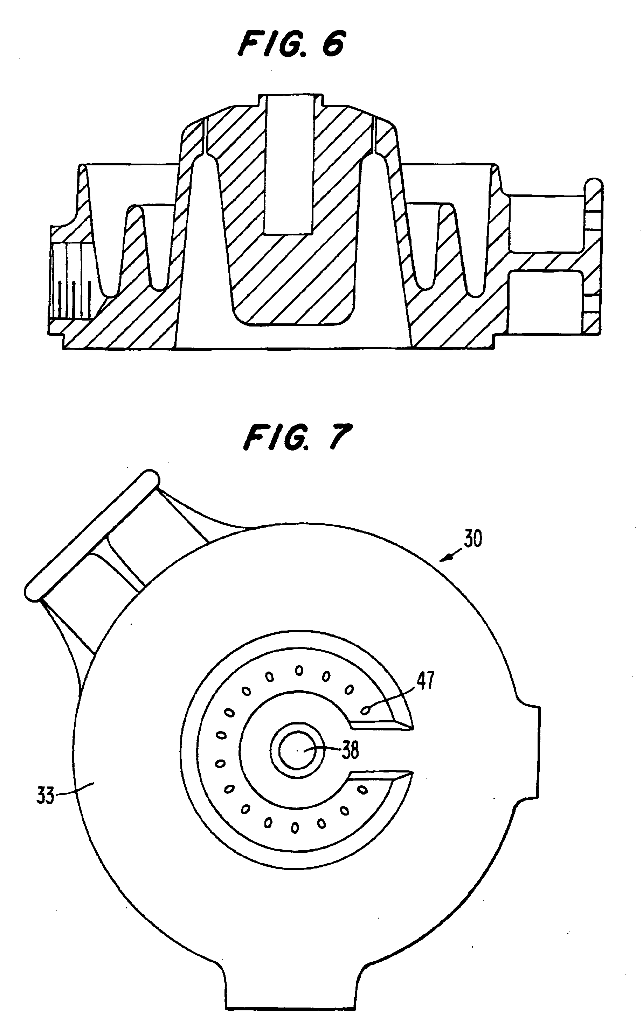

Figure 6 is a cross-sectional view of the evaporator plate of Figure 4 taken across line 6'-6';
Figure 7 is a plan view of the bottom of the evaporator plate shown in Figure 4;
Figure 8 is a full cross-sectional view of the inventive oil reclamation device as shown in Figure 1; and
Figure 9 is a full cross-sectional view of an alternative embodiment of the inventive oil reclamation device.

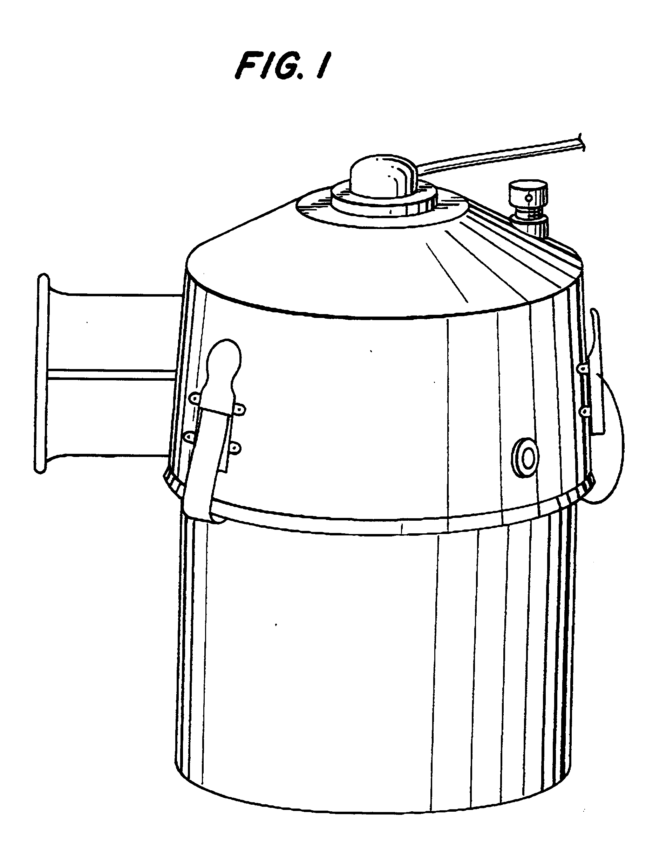

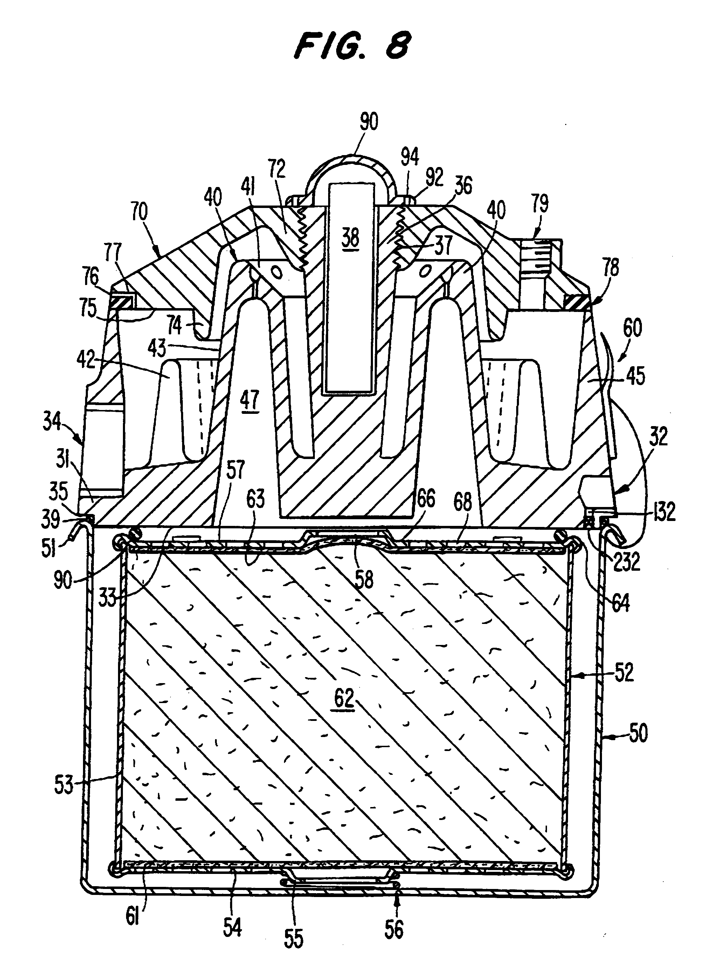

Referring to the drawings, a reclamation device, generally designated 20, and most clearly shown in Figures 1 and 8 has an evaporator plate 30 provided with an oil inlet channel 32 and an oil outlet channel 34 formed in the base plate 31 and a centre post 36 which defines a heater chamber 38. The evaporator plate 30 has a lower planar surface 33 which defines a stepped outer rim recess 35 which holds sealing gasket 39.

Evaporator plate 30 is disposed adjacent the mechanical filtration zone defined by the filter housing 50. Plate 30 which is constructed of a special aluminium alloy has extending from its upper surface a centre post 36, a concentric central member 40 and a plurality of integrally formed upwardly projecting angular sectioned evaporation walls. The angular walls define a plurality of vapourizing surfaces laterally displaced with respect to each other positioned around central member 40 and are enclosed by outer wall 45. An inwardly directed vapourizing surface 41 on the central vapourizing surface member 40 faces downwardly toward the centre heater post 36 and filtered fluid is directed from the downwardly inclined projecting top surface 41 of central member 40 onto the downwardly projecting surface 44.

The fluid travelling or vapouring surfaces which are defined between the centre post 36 and the outer wall 45 are sectioned walls 42a and 42b which combine to form a hexagonal shape. The angular sectioned walls 42 form a baffle configuration within the evaporator chamber 100. Thus, a meandering path for the oil from the centre member 40 of the evaporator plate to the oil outlet 34 is attained.

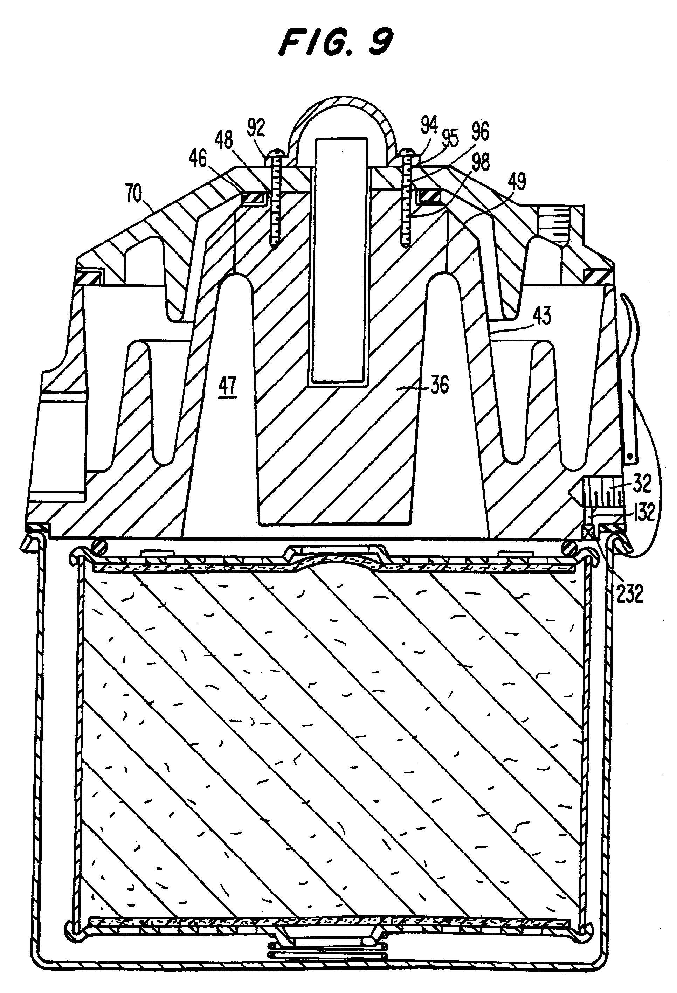

The central concentric member 40 is also provided with a plurality of throughgoing bores or passageways 47 allowing oil to flow from the filter (via holes 66 and 68) through the evaporator plate 30 into the evaporation chamber 100 adjacent centre post 36 which contains heater member 80. The initial fluid travelling surface after the fluid has been preheated travelling through passageways 47 and surfaces 41 and 44 is defined along an incline extending downwardly from the central member 40 along surface 43 away from the heater member 80 to the inner surface of hexagonal shaped wall 42. The top of the centre post 36 is threaded at 37 allowing cover member 70 to be screwed thereto. Alternatively, the cover member 70 can be attached to the centre post by the use of screws 95 which are secured in boreholes 98 of the centre post 36 as shown in Figure 9. A heater cap 90 has a flange 92 provided with two bores 94 which are coaxially aligned with bores 98 in the centre post member 36 allowing the same to be fastened by screws or other fasteners to the centre post member 36 thus providing additional security against the cover member 70 becoming unscrewed from the centre post 36 through vibration or other means.

The oil passageways 47 extend through plate 30 and deliver substantially all of the exiting oil from holes 66 and 68 out of the filter zone to the top of the central concentric member 40 so that the oil can cascade down the inwardly inclined upper surface 41 and down the side surface 44 toward the post member 36 for heating and vaporiztion or alternatively along side surface 43 toward hexagonal formed by angular members 42(a) and 42(b). The passageways 37 take the form of a conical staged bore and extend from adjacent the mechanical filtration zone where they have their widest cross-section and open into the evaporation chamber 100 along the oil introducing surface 41 where the passageways have their narrowest cross-section. The oil introducing surface 41 is inclined downwardly and inwardly with respect to the centre axis of plate 30 to direct the oil in a thin film downwardly over the vapourizing surface toward the heater element 80 housed within centre post 36.

The hexagonal angular sectioned wall 42 comprises two sections 42a and 42b divided by a fluid flow path 142 which together with central concentric member 40 form an evaporation surface.

A clip on filter housing 50 is mounted on the planar surface 33 and defines a mechanical filtration zone which receives all of the oil coming into the reclamation device 20 through inlet 32. The filter housing 50 has a downwardly turned upper flange edge 51 which engages gasket 39 and is held in place by a plurality of spring latches 60 mounted to the outside surface of outer evaporator plate wall 45. A cartridge 52 is mounted in the housing 50. The cartridge 52 is constructed with a cylindrical solid side wall 53, a solid bottom plate 54 which defines an annular outwardly projecting seat 55 with a throughgoing bore to hold biasing spring 56 on its outside surface and a solid top plate or lid 57 with an aperture 58 and surrounding circle of holes 68 which allows oil to flow into passageways 47. A compressed fibrous filter material 62 is contained in the cartridge 52. A3.2 mm (1/8 inch) 40 f..lm (micron) felt pad 63 is positioned adjacent the lid 57 on the filter material side to form a secondary filter stage which keeps cotton strands or fibres from being carried into the engine. A lower felt pad 61 is located adjacent the bottom plate 54 to prescreen the oil entering the annular projecting seat aperture. The cartridge 52 is mounted in housing 50 and is spring biased against "O" ring 90 by spring 56 which engages the bottom of housing 50. The top plate 57 defines an annular flange or shoulder 64 where it is crimped over the top of side wall 53 to hold gasket 90 in place against planar surface 33 and also defines a domed surface 66 which defines aperture 58 allowing oil to pass from the cartridge while simultaneously spacing the top plate 57. A plurality of oil discharge holes 68 ring the domed area 66 as previously noted.

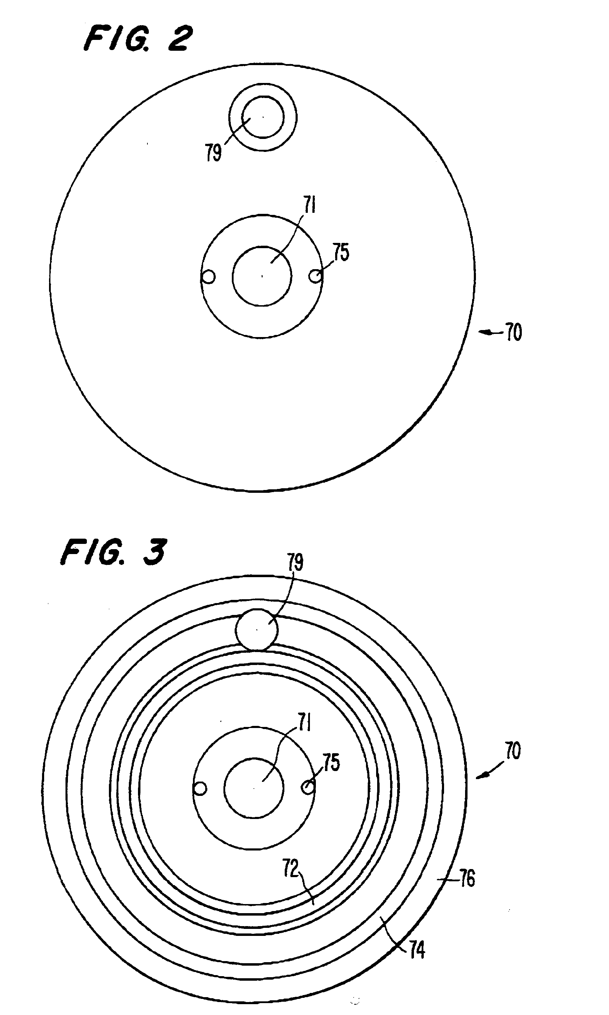

A cover member 70 as shown in Figures 2 and 3 is constructed of a special aluminium alloy is used to cover the plate evaporation surface and forms evaporation chamber 100 with evaporation plate 30. The cover member 70 has a downwardly projecting tapered post engaging member 72 with a threaded aperture 73, a downwardly projecting wall member 74 and a planar outer rim 75. Wall member 74 is located between the central member 40 and the sectioned evaporator plate walls 42a and 42b when the cover member 70 is threaded on the evaporation plate 30. A stepped recess 76 with an associated shoulder 77 located around the outer periphery of the cover member holds a gasket 78 which is located adjacent and on top of evaporator end wall 45. The cover member 70 is mounted to the outer surface of the evaporator plate by aligning threaded aperture 73 with post member 36 and threading same on the post member 36. The heater cap 90 and aligned bores 94 help maintain the heating element in a secured position and secure the cover member 70 to the evaporator plate centre post 36. The heating element 80 projects through the cover member 70 where it is covered by cap 90. A vent bore 79 is cut in the cover member wall to allow vapours to escape from the evaporation chamber 100 during the operation of the reclamation device 20.

The heating element 80 is preferably 12.7mm (¹/₂ inch) in diameter and 50.8mm (2 inches) in overall length and is constructed of stainless steel for longevity and safety and is connected directly to a power source (not shown) by the electrical leads 86. The heater generates 50 watts from a 12 or 24 volt battery. The heating element 80 and heater cavity 38 are both constructed to obtain as snug a fit as possible to provide surface to surface contact between the heating element 80 and inside wall of the cavity 38 for conducting heat through the centre post 36 to maintain a suitable temperature in the evaporation chamber 100 to accelerate vapourization of fuel and water from the oil.

Oil moves through the conical bores or passageways 47 and flows in a thin film downwardly along vapourizing surfaces 41 and 44 toward the fluid flow path located between the angular sectioned walls 42a and 42b. While the oil is in a thin film, the heat transmitted from centre post 36 vapourizes the volatile contaminates such as water and fuel which have become entrapped in the lubricating oil during its use. Because of the thin film, water will evaporate at less than 100°C (212°F.) and fuel will evaporate at less than flash point.

The filter side of evaporator plate 30 includes a planar surface 33 and stepped recess 35 located around the evaporator plates outer rim for receiving respectively "0" ring 90 and gasket member 39 providing a seated fit between the top plate 57, housing flange 51 and base plate 31.

The oil discharging area of the filter is located in the upper end central portion of top plate 57. The upper end portion of top plate 57 is formed with a domed configuration 66 having aperture 58. Spaced radial openings 68 are equally spaced and located in the upper end of the domed portion enable all of the oil to be directed from the filter toward the passageways 47 and into the evaporation chamber 100.

The filter cartridge 52 contains fibrous filter material 62 such as long strand cotton fibre material. The cotton material absorbs sulphur thereby neutralizing acids which paper cannot do. Oil enters oil inlet 32, passes down bore 132 which contains a metering jet 232 and continues flowing down the side wall 53 of the cartridge. The oil under pressure continues upward past the projecting seat 55 via its bore, through the secondary pad felt filter 61 and through the filter material 62, top pad felt filter 63 and out holes 66 and 68. The pressurized oil then rises through the centre member40via conical passageways 47. The oil flows down into the circular area (vaporizing surface) defined by central member40 and wall sections 42a and 42b into the evaporation chamber 100.

Heater 80 heats evaporator plate 30 and causes the oil to vapourize out the liquid impurities as it travels around the respective walls and chamber areas previously enumerated.

Spring clips 60 are mounted to the evaporator plate with the spring end placed under flange 51 to hold the evaporator plate and filter housing together.

An alternative embodiment is shown in Figure 9. In this embodiment, the cover plate 70 does not have a threaded aperture and is provided with throughgoing bores 96 which are aligned with bores 98 of centre post 36 and are held together by screws 95 which are threaded through bores 94, 96 and 98. The centre post 36 is also provided with a downwardly projecting oil vapourizing surface 49 which carries the oil from passageways 47 onto surface 43. Thus, it can be seen that surface 41 and the concentric central member 40 are eliminated. The centre post 36 is kept in a sealed relationship against cover 70 by gasket 46 which is seated around neck 48 of the centre post 36.

In operation the impure oil containing impurities such as, for example, carbon, dirt, silica, water, sulphuric acid (H₂S0₄), fuel and the like enters the oil reclamation device 20 by way of oil inlet 32 through bore 132 into the filter housing 50 down the side wall 53 of the canister to the bottom of the housing where it is forced through the bore of projecting seat 55 past the initial filter pad 61 into the filtering media 62. Due to the pressure maintained by the oil pump of the internal combustion engine the oil works its way through the filtering media 62, out the secondary 3.2mm (1/8 inch) felt pad filter 63, through the apertures 58 and 68 of the top plate 57 up passageways 47 of the evaporator plate into the vaporization chamber 100. The solid impurities such as, for example, dirt, silica, dust and carbon particles are captured by the initial filter pad 61, secondary filter pad 63 and filtering media 62. Since the oil and liquid contaminates have different densities, the two became separated as they engage the heated wall surfaces 36, 41 and 44 (49 and 43 in Fig. 9) and pass overthe various baffles formed by walls 42. The liquid contaminates such as, for example, water, fuel and sulphuric acid vapourize and are carried off by vent 79 into the atmosphere. The evaporation surfaces in the evaporation chamber 100 work as baffles and change the direction of the vapour and liquid carrying air causing the oil vapour to condense into the sectioned areas of the chamber due to the force of gravity and finally exit via the oil outlet 34 to the crank case for reuse as a lubricant. This is a continuous process which removes the solid and liquid contaminates on each cycling of the oil. Thus the system allows a greater time and mileage interval between oil changes, improves gas mileage and ensures continuous removal of liquid as well as solid contaminants.

## Claims

1. A fluid reclamation device for filtering solid and liquid impurities from fluid which comprises
a removable filter assembly comprising a housing, a filter cartridge means mounted in the housing; the filter cartridge means comprising a solid cylindrical side member, a top plate defining aperture means mounted to the side member and a bottom plate defining aperture means mounted to the side member, the filter assembly housing including filter material;
an evaporator plate including means holding for the filter assembly; the evaporator plate defining fluid inlet means, fluid outlet means, and a centre post defining a heater chamber;
a heater means mounted in the evaporator plate heater chamber having a surface to surface engagement with the evaporator plate for heating the fluid circulating in an evaporation chamber formed by the evaporator plate; and
a cover member removably secured to the evaporator plate to define an evaporation chamber heated by the heater means causing vaporization of liquid impurities in the fluid.

2. A fluid reclamation device according to claim 1, wherein the top plate of the cartridge is provided with an annular shoulder for holding a sealing gasket on its top surface to provide a leakproof seal between the cartridge and the evaporator plate.

3. A fluid reclamation device according to claim 1 or 2, wherein the filter assembly includes a filter pad means in the flow path between the filter material and perforated top plate of the cartridge.

4. A fluid reclamation device according to claim 3, wherein the filter pad means comprise a plurality of felt filter pads.

5. A fluid reclamation device according to any of claims 1 to 4, wherein the cartridge means is spring mounted in the housing.

6. A fluid reclamation device according to any of claims 1 to 5, wherein the filter cartridge means is a solid cylindrical casing with solid end walls, each of the end walls being provided with an aperture means through which fluid flows, one of the end walls defining a domed projection means.

7. An oil reclamation device forfiltering solid and liquid impurities from oil which comprises
a cover member, an evaporator plate removably mounted to the cover member forming a baffled evaporation chamber between the cover member and the evaporator plate for receiving oil from a filter assembly and circulating the oil in the evaporation chamber, the evaporator plate defining inlet means directly opening to a filter housing, the evaporator plate defining a planar lower surface and a central post member extending from its upper surface, the post member defining a heating chamber,
the filter assembly comprising a housing removably mounted to the evaporator plate, a filter cartridge containing filter material mounted in the housing, the filter cartridge comprising a cylindrical solid side member, a bottom plate secured to the side member defining oil inlet means and a top plate secured to the side member defining oil outlet means,
a heater means mounted in a heater chamber formed in the post member extending from the upper surface of said evaporator plate, a central heating means extending from said evaporator plate concentrically positioned around said post member, the central heating means being configured with inclined top and side surfaces, the heater means being adapted to heat oil cascading down the top and side surfaces of the central heating means and heat oil circulating in the evaporator chamber causing evaporation of liquid impurities in the oil, and vent means formed in the cover member to discharge the evaporated impurities from the evaporation chamber.

8. An oil reclamation device according to claim 7, wherein there is also threaded fastening means securing the cover member to the evaporator plate.

9. Afluid reclamation device according to claim 7 or 8, wherein the cartridge includes a filter medium and secondary filter means comprising at least one pad formed of fibre with a 1 to 4 f..lm (micron) porosity.

10. A fluid reclamation device according to claim 9, wherein the fibre is felt.

11. A fluid reclamation device according to any of claims 7 to 10, wherein the cartridge is spring mounted in the housing and biased toward the evaporator plate.

12. A fluid reclamation device according to any of claims 7 to 11, wherein the filter cartridge means is a cylindrical solid casing with solid end walls, the end walls being provided with central aperture means through which fluid flows to and from filter pad means positioned adjacent each end wall, filter medium positioned between the filter pad means, one end wall of the cartridge means defining a spring seat, and spring means mounted on the spring seat biasing the filter cartridge toward the evaporator plate.

13. A fluid reclamation device according to any of claims 7 to 13, wherein the top plate includes a central domed area with a planar top defining a central aperture and an annular rim for retaining and holding sealing means.

14. An oil reclamation device forfiltering solid and liquid impurities from oil which comprises;
a cover member with a central threaded aperture, an evaporator plate with a centre post provided with thread means removably mounted to the cover member forming a baffled evaporation chamber between the cover member and the evaporator plate for receiving oil from a filter assembly and circulating the oil in the evaporation chamber, the evaporator plate defining inlet means directly opening to a filter housing, the evaporator plate defining a planar lower surface and an upper surface, a central post member extending from the upper surface of the evaporator plate, the post member defining a heating chamber, a central heating means extending from the upper surface of the evaporator plate positioned around the post member, a baffle wall means extending from the position the upper surface of the evaporator plate substantially around the central heating means and an end wall extending from the upper surface of the evaporator plate enclosing the central post member, the central heating means, and the baffle wall means,
the filter assembly comprising a housing removably mounted to the evaporator plate, a filter cartridge containing filter material mounted in the housing, the filter cartridge comprising a cylindrical solid side member, a bottom plate secured to the side member defining oil inlet means and a top plate secured to the side member defining oil outlet means, the filter cartridge being urged against the planar lower surface of the evaporator plate by spring means engaging the bottom plate,
a heater means mounted in a heatercham- ber formed in the post member extending from the upper surface of the evaporator plate past the cover member, the heater means being adapted to heat oil cascading down the top and side surfaces of the central heating means and heat oil circulating in the evaporator chamber causing evaporation of liquid impurities in the oil, and vent means formed in the cover member to discharge the evaporated impurities from the evaporation chamber.

15. An oil reclamation device according to claim 14, wherein there is also cap means mounted to the evaporator plate post member and engaging the cover member, the cap means covering the heater means.

16. A fluid reclamation device according to claim 14, wherein the cartridge includes a cotton filter medium and secondary filter means comprising a pad formed of fibre with a 1 to 4 f..lm (micron) porosity adjacent each end plate.

17. A fluid reclamation device according to claim 16, wherein the fibre is felt.

18. An oil reclamation device for filtering solid and liquid impurities from oil which comprises;
a cover member with a central aperture, an evaporator plate with a centre post means mounted to the cover member forming a baffled evaporation chamber between the cover member and the evaporator plate for receiving oil from a filter assembly and circulating the oil in the evaporation chamber, the evaporator plate defining inlet means directly opening to a filter housing, the evaporator plate defining a planar lower surface and an upper surface, a central post member extending from the upper surface of the evaporator plate, the post member defining a heating chamber, a baffle wall means extending from the position of the upper surface of the evaporator plate substantially around the post member and an end wall extending from the upper surface of the evaporator plate enclosing the central post member, and the baffle wall means,
the filter assembly comprising a housing removably mounted to the evaporator plate, a filter cartridge containing filter material mounted in the housing, the filter cartridge comprising a cylindrical solid side member, a bottom plate secured to the side member defining oil inlet means and a top plate secured to the side member defining oil outlet means, the filter cartridge being urged against the planar lower surface of the evaporator plate by spring means engaging the bottom plate,
a heater means mounted in a heater chamber formed in the post member extending from the upper surface of the evaporator plate past the cover member, the heater means being adapted to heat oil cascading down an outwardly inclined top and side surface of the post member and heat oil circulating in the evaporator chamber causing evaporation of liquid impurities in the oil, and vent means.

19. A fluid reclamation device according to claim 18, wherein the baffle wall means is sectioned and forms a hexagonal configuration.
